# EUROPEAN PATENT APPLICATION

(11) **EP 4 726 485 A1**
(43) Date of publication of application: **15.04.2026**
(21) Application number: 24218797.9
(22) Date of filing: 10.12.2024
(51) Int. Cl.: G05D 1/224, G05D 101/00, G05D 109/30, B25J 11/00, B25J 9/00, B61L 1/00, B63H 25/00

(54) **RETROFIT ROBOTIC APPARATUS AND METHOD FOR REMOTELY MANOEUVRING A VEHICLE**

(30) Priority: 09.10.2024 PT 2024119795
(71) Applicant: Evoleo Technologies, LDA, 4425-656 Maia (PT)
(72) Inventor: MACHADO RIBEIRO, Pedro José, 4425-656 MAIA (PT); MAIA DA CRUZ MARTINS, Rodolfo Manuel, 4425-656 MAIA (PT)
(74) Representative: Patentree

(57) **Abstract**

The present disclosure relates to a retrofit robotic apparatus and method for remote manoeuvring of a vehicle.

The method for remotely manoeuvring a vehicle using a retrofit robotic apparatus, comprising: a remote operator inserting control signals into a remote user interface; the remote user interface transmits said control signals to a control unit of a robotic apparatus installed in the vehicle; the retrofit robotic apparatus mechanically actuating the vehicle's driving mechanisms based on the received control signals; the retrofit robotic apparatus providing real-time feedback to the remote operator, enabling continuous control of the vehicle; wherein providing the real-time feedback comprises: capturing data from sensors monitoring the vehicle, in particular speed, position and environment conditions; transmitting said data to a remote user interface in real-time; simulating real-time vehicle conditions for remote operator control.

## Description

### TECHNICAL FIELD

The present disclosure relates to a retrofit robotic apparatus and method for remote manoeuvring of a vehicle.

In particular, the present disclosure relates generally to a retrofit robotic apparatus that can operate and manoeuvring a vehicle in a coordinated manner and controlled by a vehicle onboard control system.

### BACKGROUND

As autonomous driving technologies advance, there is increasing demand for systems that allow the remote operation of vehicles. Such technologies are beneficial for a range of applications, including hazardous environments, emergency services, and convenience in various sectors. Conventional systems have limitations in terms of reliability, responsiveness, and the level of control a remote operator can exert on the vehicle. There is a need for improved methods and apparatuses that enhance the precision, safety, and effectiveness of remotely controlled vehicles.

Remotely controlling the manoeuvring of large vehicles, such as trains or boats, introduces a series of significant challenges that differ from traditional onboard control. One of the primary issues stems from the lack of direct sensory input for the remote operator. When controlling a vehicle from a distant location, operators lose the tactile feedback and immediate situational awareness they would otherwise have when physically present. For example, train drivers or boat captains rely on their senses to gauge the movement of the vehicle, its speed, and its interaction with the environment, such as vibrations or the sound of the engine. This sensory disconnection in remote operation can make it difficult for operators to make quick and precise adjustments during critical manoeuvres.

In addition to the lack of sensory input, latency in communication between the remote control system and the vehicle presents another challenge. For large vehicles, like trains and boats, even a slight delay in transmitting control signals can have significant consequences. Trains require precise timing for braking, particularly due to their long stopping distances. A delay of just a few seconds in the command transmission could result in overshooting a stop or being unable to avoid a collision. Similarly, boats, which are subject to water currents and wind forces, demand precise steering inputs to navigate narrow waterways or docking areas. Latency issues in remote systems increase the difficulty of making these fine adjustments in real time, raising the risk of accidents.

The complexity of the environments in which trains and boats operate further complicates remote manoeuvring. Trains move along fixed tracks, often in busy rail networks with multiple other trains, where any error in control could lead to serious accidents. Coordinating multiple remote-operated trains on shared tracks requires robust systems to ensure accurate communication and avoid potential conflicts. Boats face similar challenges but in less predictable environments, such as open water or congested harbours. Environmental factors like tides, currents, and weather can change rapidly, requiring continuous adjustment from the operator. Without direct visibility or situational awareness, a remote operator's ability to respond to such changes is limited, increasing the difficulty of safe navigation.

Safety mechanisms in remote control systems for trains and boats must be more advanced than those in traditional setups. In remote operation, the operator relies heavily on feedback from sensors, cameras, and other systems to make decisions. However, if there is a failure in any of these feedback systems, such as a camera losing its signal or a sensor malfunctioning, the remote operator may be left "blind," unable to accurately assess the situation. Therefore, it is critical to have fail-safes in place, such as automatic braking for trains or emergency stop functions for boats, to prevent accidents in case of communication or system failures. These safety features must be integrated into the remote control apparatus to minimize risks associated with the operator being physically detached from the vehicle.

Finally, the issue of operator training and adaptation to remote control interfaces is significant. Operating large vehicles, like trains and boats, requires years of experience, and switching to remote control can drastically change the nature of the task. The operator must now rely on video feeds, digital controls, and indirect data instead of traditional, hands-on controls. The cognitive load increases as operators must process visual information on screens, interpret sensor data, and react without the usual cues they are accustomed to. This shift in operation mode requires extensive training and new protocols to ensure that operators can safely and effectively manoeuvre these vehicles remotely, minimizing the chances of human error.

In document GB2598794A, it is disclosed the control or monitoring of a remote controlled vehicle performed by providing plural remote sensors to determine relative distances, executing a planned manoeuvre of the remote controlled vehicle, and using the determined distances to control or monitor a position and movement of the remote controlled vehicle when executing the planned manoeuvre. The manoeuvre is a bodily movement of the remote controlled vehicle and/or a movement of a component of the remote controlled vehicle, such as a platform of a scissor lift. The remote sensors may be provided on control vehicles. The planned manoeuvre may be automatically controlled or executed by a human operator. The remote controlled vehicle and the control vehicles may be airside vehicles of an airport, e.g. cargo or baggage handling vehicle. Also provided is a control vehicle and a transportation system.

In document WO2020002473A1 discloses a robot arm comprising at least one arm section; a first articulated joint formed at a proximal end of said robot arm and configured for mounting to a base; and a second articulated joint formed at a distal end of said robot arm and configured for mounting a tool; wherein said first and second articulate joints comprises actuators configured for imparting movement between the base and the robot arm, and the robot arm and the tool, respectively, and wherein at least one element comprises a liquid displacement device, and wherein the elements are chosen from the tool, the distal joint, or the arm section.

These facts are disclosed in order to illustrate the technical problem addressed by the present disclosure.

### GENERAL DESCRIPTION

The present disclosure relates to a retrofit robotic apparatus and method for remote manoeuvring of a vehicle.

The solution of the present disclosure is applicable to various vehicles, such as trains or boats and is particularly beneficial for remote manoeuvring these vehicles without local human intervention, providing observability and controllability of vehicles.

The present disclosure is directed to methods, computer programs and systems, and retrofit robotic apparatus to operate and manoeuvring an already existing vehicle by replication the human driver movements or actions, remotely controlled in real-time or by pre-defined sequence of movements or actions.

Along this description, it is considered that manoeuvering are the set of operations, sometimes took in idle position or low speed, to move skilfully or carefully a vehicle, such as a train or a boat.

Along this description, it is considered that a retrofit is to furnish an additional capacity to something, such as a computer, vehicle, or building, with new or modified parts or equipment not available or considered necessary at the time of manufacture.

The remote control encompasses human in the loop for every command or action, or fully autonomous where the sequence of actions and verifications are performed without the human driver in the loop.

The remote-control centre provides the information required by the human driver to take decisions and perform actions as if the human driver was physically at the vehicle.

The retrofit robotic apparatus design comprises a quick installation and deployment, to reduce the downtime of the vehicle and ease the installation process. The installation is non-intrusive, requiring no change on the vehicle and maintaining the vehicle homologation and warranty. The interfaces between the vehicle and the system are mechanical and electrical. The installation is adapted to the vehicle type, in terms of mechanical fixing points and geometry. The retrofit robotic apparatus can be fixed to the fixing points available inside the vehicle, typically used to secure the wall panels. Additionally, an add-on structure can be added to the vehicle interior to sustain the and system adapted to the interior geometry. Similarly, the deinstallation process is also quick and simple. The electrical interface uses the standard power source available in the vehicle, e.g. 24V DC. The retrofit robotic apparatus incorporates the means to operate while the vehicle is not providing power, e.g. vehicle switched-OFF, including batteries for power storage.

The retrofit robotic apparatus includes sensors and computers to watch, monitor, record, and interpret commands and actions of the remote human driver, to develop robot-executable set of commands robust to variations and changes in the environment, capable of allowing the robotic apparatus to perform the activities as performed by the human driver.

The retrofit robotic apparatus comprises at least one robot capable to move or stand on a fixed position, robotic arms, grips and hands, which replicate the precise movements of a vehicle operator in the same sequence, or substantially the same sequence, and same timing, or substantially same timing, to operate and drive the vehicle based on previously recorded software file, procedure or sequence of procedures, triggered by a remote human operator or autonomous computer controlled without human in the loop.

The retrofit robotic apparatus has a compact design to enable the co-existence with the vehicle driver. When the vehicle is used by a physically present vehicle driver, the apparatus can be parked in a place where does not interfere with the driving volume of the driver and respective visibility and ergonomic. The apparatus provides visual signs on the vehicle doors to warn the vehicle driver that the apparatus has the remote control activated and should not get into the vehicle. The apparatus includes the detection of humans inside the vehicle and operationally adapts accordingly to the pre-defined safety rules, e.g. stop immediately the vehicle. Additionally, the retrofit robotic apparatus is a collaborative robot and sensitivity associated with the movements to gracefully stop in case of collision with some object or person.

The retrofit robotic apparatus includes at least one robot that could be located at different vehicle locations and can operate and drive the vehicle in a coordinated manner and controlled by a vehicle onboard control system. Each robot has the tools, handles and utensils to interact or control the vehicle controls, which might include levers, wheels, pedals, push buttons, rotative buttons, touch buttons, among other types of controls.

In an embodiment, the retrofit robotic apparatus comprises a robot, for example a robot arm mounted on ceiling rails with capability to move, based on linear movement or rotational extension fixed on the ceiling. The control unit controls the robot arm movements and related onboard functionalities. This same computer can incorporate the communication module and interfaces to the remote control centre.

The retrofit robotic apparatus comprises the degrees of freedom to actuate the vehicle controls in similar performance, e.g. robotic arm, of movement as the vehicle driver. The retrofit robotic apparatus also includes the capability to move along the vehicle cabin or machine room, to increase the outreach and flexibility of control of the vehicle, e.g. robotic arm with ceiling rail-based movement. The retrofit robotic apparatus can be mounted on rails directly on the ceiling to provide linear movement, and the rails disposition adapted to the vehicle interior geometry and control areas.

In an embodiment, the sensors included in the retrofit robotic apparatus are selected from a list consisting of: vision cameras, depth cameras, lidar, robot positioning sensors, microphones, accelerometers, geolocation sensors, and their combinations thereof.

In an embodiment, the retrofit robotic apparatus is located at the main operational points of the vehicle, such as in vehicle driver cabins and vehicle machine room.

The retrofit robotic apparatus control system converts the operation commands from remote control system, into a set of robotic apparatus executable commands to replicate the human driver movements or actions as if the human driver or operator was physically at the vehicle.

The retrofit robotic apparatus control system includes the capability for real-time adjustments to the environment to provide the autonomy to the robotic apparatus to execute the vehicle operations and controls without the remote human intervention. For such, the retrofit robotic apparatus comprises an environment and object detection and path planning to avoid robot collision with the operating environment, e.g. lever positions or objects like papers left in the controlling area. In an embodiment, this path planning is programmed into the control unit or object detection sensors are used to help the retrofit robotic apparatus to avoid collisions. This capacity of real-time feedback enables safety of remote manoeuvers made in vehicles by way of a quick feedback of the vehicle behaviour.

The retrofit robotic apparatus control system includes the capability to coordinate the robot or set of robots within the same vehicle, including the driver replication sequences and movements. A learning mode is also present to record and learn the actions and controls as the vehicle operator or driver. For such, the control unit enables to implement sequence of actions, e.g. operational procedures, that might involve the synchronization of operations performed by at least one robot. In an embodiment, the robot has the capability to detect his relative position. This feature can be used for a learning mode used in the deployment phase, where the technician can map the controls using this robot telemetry.

In an embodiment, the retrofit robotic apparatus also includes an autocalibration system to calibrate the robots positioning and movement. The autocalibration system comprises visual targets to measure and correct displacements of the position, which might be induced by the high vibration and shocks operating environment. This visual targets can be synthetic or inherent to the vehicle geometry, e.g. driver cabin shape or edges.

The retrofit robotic apparatus includes a set of sensors and cameras to capture and monitor the environment and vehicle. In an embodiment, the set of sensors and cameras shall be installed in predefined points, adjustable to every vehicle type and use cases. Typical deployment places include: Vehicle front view (short and longer distances), left and right vehicle's view, driver cabin overview, driver cabin controls and monitors, robot actuation and vehicle machine room, among others.

The remote-control centre comprises a remote fleet management layer and the remote-control stations. The remote fleet management oversees the remote connection negotiations and remote driving stations and vehicles pairing. The control station enables the remote connection to a pre-defined vehicle, asserted by the fleet management, and provides the visual information provided by live video streaming of the vehicle interior views, e.g. front view short and long range, vehicle control desk and dashboard. In addition, sound and vibration information is also live streamed to enhance the perception of the remote driver.

An embodiment of the present disclosure might be a set of robotic arms and cameras installed on a train locomotive to replicate the train driver operations, either at the locomotive driver cabin or at the engines room. The video stream, audio, temperatures, or accelerations installed in the robotic apparatus would be acquired and transmitted to a remote-control centre. At the remote centre, a remote operator, or autonomous execution program, will be able to observe and monitor the vehicle environment and remotely operate the vehicle.

The remote-control centre comprises a virtual cockpit program to provide the environment and vehicle information and replicate the interior and exterior perspectives of the vehicle to a remote driver and provide the capability to interact with the vehicle controls as if the operator was physically at the vehicle.

The remote-control centre includes the fleet management perspective, providing the capability to manage a fleet of robotic apparatus-controlled vehicles. A planning, scheduling or allocation capability allows a remote operator to allocate remote operations to the vehicles. The remote operations could have the form of sequence of actions and operations followed by a remote operator to more complex autonomous tasks without local human intervention.

An embodiment of the present disclosure might be a start-up procedure of a train locomotive, where it comprises a sequence of operations performed by the operator to start and check the locomotive at the beginning of operation. This procedure includes the actuation and control of some locomotive systems and observability of some locomotive telemetries. This procedure could be performed with a remote operator following the pre-defined procedure or completely autonomously where the remote-control system would execute the sequence of operations and assess and validate the criteria on each sequence step execution.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the retrofit robotic apparatus.
**Figure 2****:** Schematic representation of an embodiment of the remote control center.
**Figure 3****:** Schematic representation of an embodiment of the remote control center.
**Figure 4****:** Photographic representation of the retrofit robotic apparatus mounted on the interior of a vehicle, in particular in a train.

### DETAILED DESCRIPTION

The present disclosure relates to a retrofit robotic apparatus and method for remote manoeuvring of a vehicle.

The present disclosure relates to a retrofit robotic apparatus with a real-time feedback comprising capturing data from sensors monitoring the vehicle, in particular speed, position and environment conditions; transmitting said data to a remote user interface in real-time; providing real-time feedback to simulate real-time vehicle conditions for remote operator control, enhancing the operations by providing observability and controllability of the vehicles.

It is disclosed a method for remotely manoeuvring a vehicle using a retrofit robotic apparatus, comprising: a remote operator inserting control signals into a remote user interface; the remote user interface transmits said control signals to a control unit of a retrofit robotic apparatus installed in the vehicle; the retrofit robotic apparatus mechanically actuating the vehicle's driving mechanisms based on the received control signals; the retrofit robotic apparatus providing real-time feedback to the remote operator, enabling continuous control of the vehicle; wherein the real-time feedback comprises: capturing data from sensors monitoring the vehicle, in particular speed, position and environment conditions; transmitting said data to a remote user interface in real-time; providing real-time feedback to simulate real-time vehicle conditions for remote operator control.

In an embodiment, the vehicle's driving mechanisms actuated by the method comprise steering, acceleration, and/or braking mechanisms.

In an embodiment, the method further comprises: capturing video feed from cameras mounted on the vehicle; transmitting the video feed to the remote operator in real time to aid in navigation and decision-making.

In an embodiment, the real-time feedback obtained by the method to the remote operator is done through via visual, auditory, or tactile means to ensure safe and precise operation of the vehicle.

In an embodiment, the remote interface of the method comprises: a user input device such as a steering wheel, joystick, or control panel; a display unit providing real-time information regarding the vehicle's speed, location, and environment.

In an embodiment, the method further comprises automatic adjustment of the vehicle's speed based on environmental conditions, such as proximity to obstacles, to ensure safe remote operation.

In an embodiment, the method further comprises an autonomous override feature that enables the vehicle to execute emergency manoeuvres when necessary, independent of the remote operator's control.

In an embodiment, the control signals used in the method are transmitted to the retrofit robotic apparatus in an encrypted format to ensure secure communication between the remote operator and the vehicle.

In an embodiment, the retrofit robotic apparatus of the method is installed on the vehicle's ceiling, in particular mounted on ceiling rails.

It is also disclosed a retrofit robotic apparatus for remotely manoeuvring a vehicle using the method of any of the previous claims, comprising: a robotic arm; a plurality of actuators at the edge of the robotic arm configured to mechanically interface with the vehicle's driving mechanisms; a control unit configured to wirelessly receive commands from a remote user interface and convert said commands into physical movements of the plurality of actuators to mechanically actuate the vehicle's driving mechanisms; a plurality of sensors configured to monitor the vehicle, in particular speed, position and environment conditions, and to provide real-time feedback to a remote operator.

In an embodiment, the control unit of the retrofit robotic apparatus comprises: a safety protocol to halt vehicle operation in the event of a signal loss or malfunction, for better results.

In an embodiment, the retrofit robotic apparatus further comprises a fail-safe mechanism configured to automatically engage the vehicle's brakes upon detecting a communication failure between the remote operator and the vehicle, for better results.

In an embodiment, the plurality of sensors of the retrofit robotic apparatus comprises GPS modules and proximity detectors to provide location and distance information during remote navigation, for better and more accurate results.

In an embodiment, the plurality of sensors of the retrofit robotic apparatus is installed on the vehicle front view, left and right vehicle's view, driver cabin overview, driver cabin controls and monitors, robot actuation and vehicle machine room, for better results.

In an embodiment, the communication module of the retrofit robotic apparatus is configured to switch between different network protocols to ensure uninterrupted connectivity during remote operation, such as transitioning from Wi-Fi to cellular networks when necessary, for better results.

In an embodiment, the retrofit robotic apparatus further comprises at least one object detection sensor, for better results.

In an embodiment, the retrofit robotic apparatus further comprises visual targets to measure and correct displacements of the position, for better results.

It is also disclosed a vehicle comprising the mentioned robotic apparatus.

In an embodiment, the vehicle is a train or a boat, for more accurate and better results.

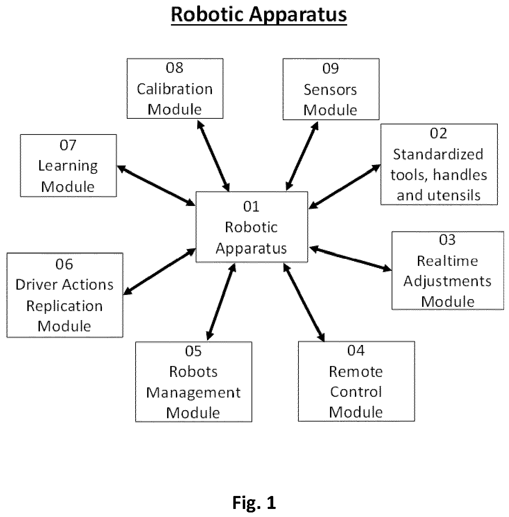

Figure 1 illustrates the modules related to the retrofit robotic apparatus, namely standardized tools, handles and utensils for contact with the vehicle's driving mechanisms, a real-time adjustments module, a remote control module, a robots management module, a driver actions replication module, a learning module, a calibration module and a sensors module.

In an embodiment, the standardized tools handles and utensils of the retrofit robotic apparatus are used for contact with the vehicle's driving mechanisms.

In an embodiment, the real-time adjustments module used in the retrofit robotic apparatus is in charge of control the robots on its perceived environment.

In an embodiment, the remote control module used in the retrofit robotic apparatus oversees the communications and interfaces with the remote-control centre.

In an embodiment, the robots management module used in the retrofit robotic apparatus manages and synchronizes the robots installed within the same vehicle.

In an embodiment, the driver actions replication module used in the retrofit robotic apparatus is in charge of mimicking the movements and actions of the vehicle driver.

In an embodiment, the learning module used in the retrofit robotic apparatus is in charge of recording movements and mapping actions to controls.

In an embodiment, the calibration module used in the retrofit robotic apparatus adjusts geometric deviations and correct movements and targets.

In an embodiment, the sensors module used in the retrofit robotic apparatus is in charge of the sensors data collection and transmission to the control centre.

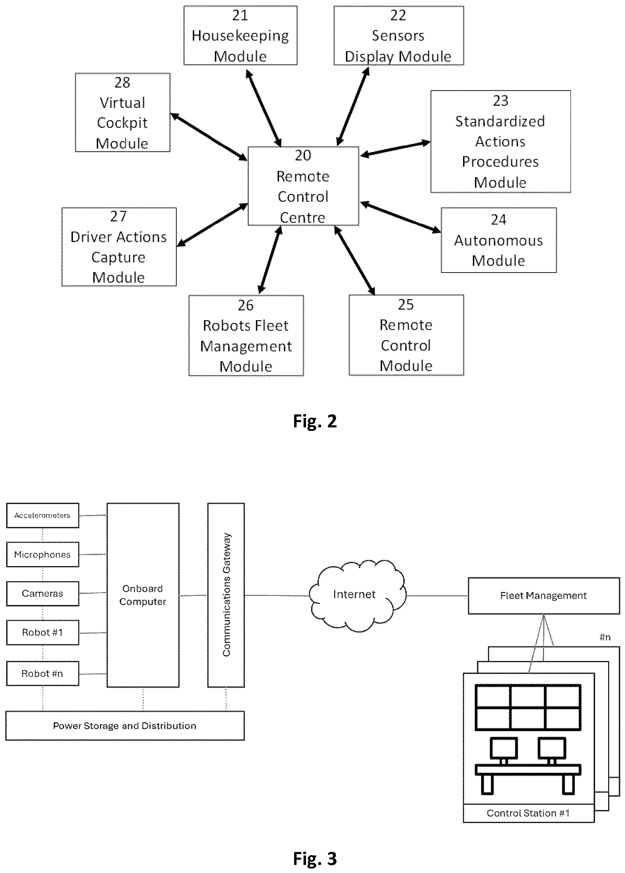

Figure 2 illustrates the modules related to the remote control centre, namely a housekeeping module, a sensors display module, a standardized actions procedures module, an autonomous module, a remote control module, a robots fleet management module, a driver actions capture module and a virtual cockpit module.

In an embodiment, the housekeeping module used in the retrofit robotic apparatus is in charge of the gathering of the system telemetries, e.g. power consumption, battery voltage, timings and latencies, among others.

In an embodiment, the sensors display module used in the retrofit robotic apparatus is in charge of displaying the different sensors information, e.g. videos, sound, accelerometers, among others.

In an embodiment, the standardized actions procedures module used in the retrofit robotic apparatus oversees the pre-defined operational procedures, e.g. form inputs for keyboards and touchscreens like Driver ID, vehicle start-up procedures, among others.

In an embodiment, the autonomous module used in the retrofit robotic apparatus is in charge of the execution of pre-defined procedures without human intervention.

In an embodiment, the remote control module used in the retrofit robotic apparatus provides the real-time control of the remote driver.

In an embodiment, the virtual cockpit module used in the retrofit robotic apparatus mimics the vehicle dashboard and controls.

In an embodiment, the robots fleet management module used in the retrofit robotic apparatus is in charge of dealing with the fleet of vehicles equipped with the system and negotiation of remote control and assertion of the remote driver stations to the remote driver.

In an embodiment, the driver actions capture module is in charge of the learning mode for actions and sequences for the pre-defined operations definition.

Figure 3 illustrates a schematic representation of an embodiment of the remote control center.

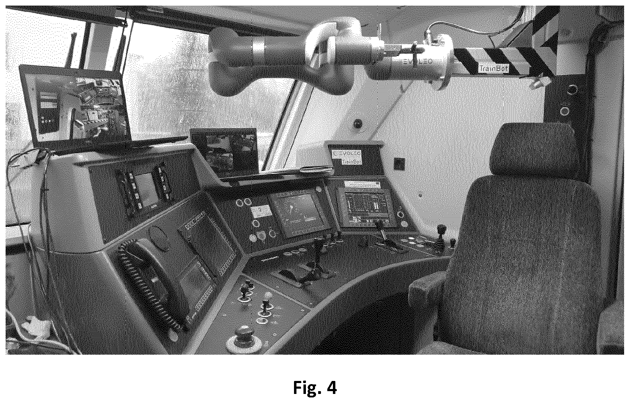

Figure 4 illustrates a photographic representation of the retrofit robotic apparatus mounted on the interior of a vehicle, in particular in a train.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A method for remotely manoeuvring a vehicle using a retrofit robotic apparatus, comprising:
a remote operator inserting control signals into a remote user interface;
the remote user interface transmits said control signals to a control unit of a robotic apparatus installed in the vehicle;
the retrofit robotic apparatus mechanically actuating the vehicle's driving mechanisms based on the received control signals;
the retrofit robotic apparatus providing real-time feedback to the remote operator, enabling continuous control of the vehicle;
wherein the real-time feedback comprises:
capturing data from sensors monitoring the vehicle, in particular speed, position and environment conditions;
transmitting said data to a remote user interface in real-time;
providing real-time feedback to simulate real-time vehicle conditions for remote operator control.

2. The method according to the previous claim, wherein the vehicle's driving mechanisms comprise steering, acceleration, and/or braking mechanisms.

3. The method according to any of the previous claims, further comprising:
capturing video feed from cameras mounted on the vehicle;
transmitting the video feed to the remote operator in real-time to aid in navigation and decision-making.

4. The method according to any of the previous claims, wherein the real-time feedback to the remote operator is done through via visual, auditory, or tactile means.

5. The method according to any of the previous claims, wherein the remote user interface comprises:
a user input device such as a steering wheel, joystick, or control panel;
a display unit providing real-time information regarding the vehicle's speed, location, and environment.

6. The method according to any of the previous claims, further comprising automatic adjustment of the vehicle's speed based on environmental conditions, such as proximity to obstacles.

7. The method according to any of the previous claims, further comprising an autonomous override feature that enables the vehicle to execute emergency manoeuvres when necessary, independent of the remote operator's control.

8. The method according to any of the previous claims, wherein the control signals transmitted to the retrofit robotic apparatus are encrypted.

9. A retrofit robotic apparatus for remotely manoeuvring an existing vehicle using the method of any of the previous claims, comprising:
a robotic arm;
a plurality of actuators at the edge of the robotic arm configured to mechanically interface with the vehicle's driving mechanisms;
a control unit configured to wirelessly receive commands from a remote user interface and convert said commands into physical movements of the plurality of actuators to mechanically actuate the vehicle's driving mechanisms;
a battery for power storage;
a plurality of sensors configured to monitor the vehicle, in particular speed, position and environment conditions, and to provide real-time feedback to a remote operator.

10. The retrofit robotic apparatus according to the previous claim, wherein the control unit comprises a safety protocol to halt vehicle operation in the event of a signal loss or malfunction, more preferably wherein the control unit is configured to switch between different network protocols to ensure uninterrupted connectivity during remote operation, such as transitioning from Wi-Fi to cellular networks when necessary.

11. The retrofit robotic apparatus according to any of the previous claims 9 to 10, further comprising a fail-safe mechanism configured to automatically engage the vehicle's brakes upon detecting a communication failure between the remote operator and the vehicle.

12. The retrofit robotic apparatus according to any of the previous claims 9 to 11, wherein the plurality of sensors comprises GPS modules and proximity detectors to provide location and distance information during remote navigation, more preferably wherein the plurality of sensors is installed on the vehicle front view, left and right vehicle's view, driver cabin overview, driver cabin controls and monitors, robot actuation and vehicle machine room.

13. The retrofit robotic apparatus according to any of the previous claims 9 to 12, further comprising visual targets to measure and correct displacements of the position.

14. The retrofit robotic apparatus according to any of the previous claims 9 to 13, wherein said apparatus is installed on the vehicle's fixing points or is installed on an add-on structure in the vehicle's interior.

15. A vehicle comprising the retrofit robotic apparatus of any of the claims 10 to 14, in particular wherein said vehicle is a train or a boat.
